# EUROPÄISCHE PATENTSCHRIFT

(11) **EP 1 098 499 B1**
(45) Veröffentlichungstag und Bekanntmachung des Hinweises auf die Patenterteilung: **21.04.2010**
(21) Anmeldenummer: 00118096.7
(22) Anmeldetag: 23.08.2000
(51) Int. Cl.: H04M 1/274

(54) **Telekommunikationsvorrichtung und Verfahren**
Telecommunication device and method
Appareil et procédé de télécommunication

(30) Priorität: 06.11.1999 DE 19953514
(43) Veröffentlichungstag der Anmeldung: 09.05.2001
(73) Patentinhaber: Tenovis GmbH & Co. KG, 60362 Frankfurt (DE)
(72) Erfinder: Ludwig, Hubertus, 70569 Stuttgart (DE)
(74) Vertreter: Tergau & Pohl Patentanwälte

(56) Entgegenhaltungen:
- DE-A- 19 709 408
- GB-A- 2 171 274
- US-A- 4 581 488
- US-A- 5 689 557
- US-A- 5 719 931
- US-A- 5 802 165

## Beschreibung

### Stand der Technik

Die Erfindung geht aus von einer Telekommunikationsvorrichtung und von einem Verfahren nach der Gattung des Hauptanspruchs und des Nebenanspruchs aus. Es ist bekannt, mittels Ziehlwahltaste eine in einen Speicher eingespeicherte Ziffernfolge durch Betätigung der Ziehlwahltaste als Rufnummer bzw. als Teil einer Rufnummer zu generieren. Dabei ist aus der DE 196 23 299 A1 beispielsweise ein Verfahren und ein Telekommunikationsgerät zur automatischen Herstellung einer Telefonverbindung von einer sich außerhalb eines Referenznetzes befindlichen Mobilstation bekannt. Weiterhin ist bekannt, Telekommunikationsgeräte mit der Funktion "Wahlwiederholung" auszustatten. Hierbei wird permanent die zuletzt eingegebene Ziffernfolge in einem Speicher des Telekommunikationsgerätes gespeichert. Durch Betätigung einer besonderen Eingabeeinrichtung "Wahlwiederholungstaste" wird die zuletzt eingegebene Ziffernfolge als Ganzes generiert.

### Vorteile der Erfindung

Die erfindungsgemäße Telekommunikationsvorrichtung und das erfindungsgemäße Verfahren mit den Merkmalen der nebengeordneten Ansprüche hat demgegenüber den Vorteil, dass eine intelligente Wahlwiederholung durchführbar ist, wobei der Anteil der Rufnummer, der zur Bestimmung eines Festnetzanbieters dient, automatisch weggelassen und durch eine andere Ziffernfolge ersetzt wird. Somit ist eine komfortablere Bedienung der erfindungsgemässen Telekommunikationsvorrichtung möglich und die - in der Regel längere - Teilnehmerrufnummer muss bei einem Wechsel des Festnetzanbieters nicht neu eingegeben werden.

Durch die in den Unteransprüchen aufgeführten Massnahmen ist eine vorteilhafte Weiterbildung und Verbesserung der im Vorrichtungsanspruch angegebenen Telekommunikationsvorrichtung möglich.

Weiterhin ist es von Vorteil, dass die Telekommunikationsvorrichtung Mittel zur Erkennung der den Netzbetreiber bestimmenden ersten Teilnummer der zweiten Rufnummer umfasst. Dadurch ist es möglich, die erste Teilnummer der zweiten Rufnummer gezielt bei der ersten Rufnummer entweder wegzulassen oder durch eine andere erste Teilnummer zu ersetzen. Hierdurch wird ein Wechsel des Netzbetreibers auf komfortable Weise möglich.

Weiterhin ist von Vorteil, dass die Eingabemittel Zielwahltasten oder ein Wahltastenblock sind. Hierdurch steht es einem Benutzer frei, bestimmte Ziffernfolgen, insbesondere solche, die Netzbetreiber bestimmen, in Zielwahltasten zugeordenten Speichern abzulegen und die Ziffernfolgen, die für andere Netzbetreiber bestimmend sind - beispielsweise aufgrund einer zu geringen Anzahl von Zielwahltasten für alle Netzbetreiber - manuell einzugeben. Dies erhöht den Komfort der Benutzung der erfindungsgemässen Telekommunikationsvorrichtung.

Weiterhin ist von Vorteil, daß die Telekommunikationsvorrichtung Mittel zur Erkennung einer Besetztsituation im Bereich des Netzbetreibers umfaßt und daß die Telekommunikationsvorrichtung Wiedergabemittel zur Signalisierung einer Besetztsituation im Bereich des Netzbetreibers umfaßt. Hierdurch ist es möglich, dem Benutzer zu signalisieren, daß die Ursache für eine aufgetretene Besetztsituation im Bereich des Netzbetreibers zu suchen ist und durch einen Wechsel desselben eine Kommunikationsverbindung möglicherweise erfolgreich zustande zu bringen ist.

Weiterhin ist von Vorteil, daß die Telekommunikationsvorrichtung Mittel zur Erkennung einer Besetztsituation im Bereich des Netzbetreibers umfaßt und daß die Kopiervorrichtung automatisch aktivierbar ist. Dadurch kann durch Auswahl einer Anzahl von Netzbetreiber bestimmenden Ziffernfolgen ein automatischer Wechsel des Netzbetreibers durchgeführt werden, was den Bedienungskomfort der Telekommunikationsvorrichtung erhöht.

### Zeichnung

Ein Ausführungsbeispiel der Erfindung ist in der Zeichnung dargestellt und in der nachfolgenden Beschreibung näher erläutert. Es zeigen
Figur 1 eine erfindungsgemäße Telekommunikationsvorrichtung mit einem daran angeschlossenen Telekommunikationsnetz und einem Teilnehmer,
Figur 2 den schematischen Aufbau einer ersten und einer zweiten Rufnummer aus jeweils einer ersten Teilnummer und einer zweiten Teilnummer,
Figur 3 ein Ablaufdiagramm einer ersten Funktionsweise der erfindungsgemäßen Telekommunikationsvorrichtung und
Figur 4 ein Ablaufdiagramm einer zweiten Funktionsweise der erfindungsgemäßen Telekommunikationsvorrichtung.

### Beschreibung des Ausführungsbeispiels

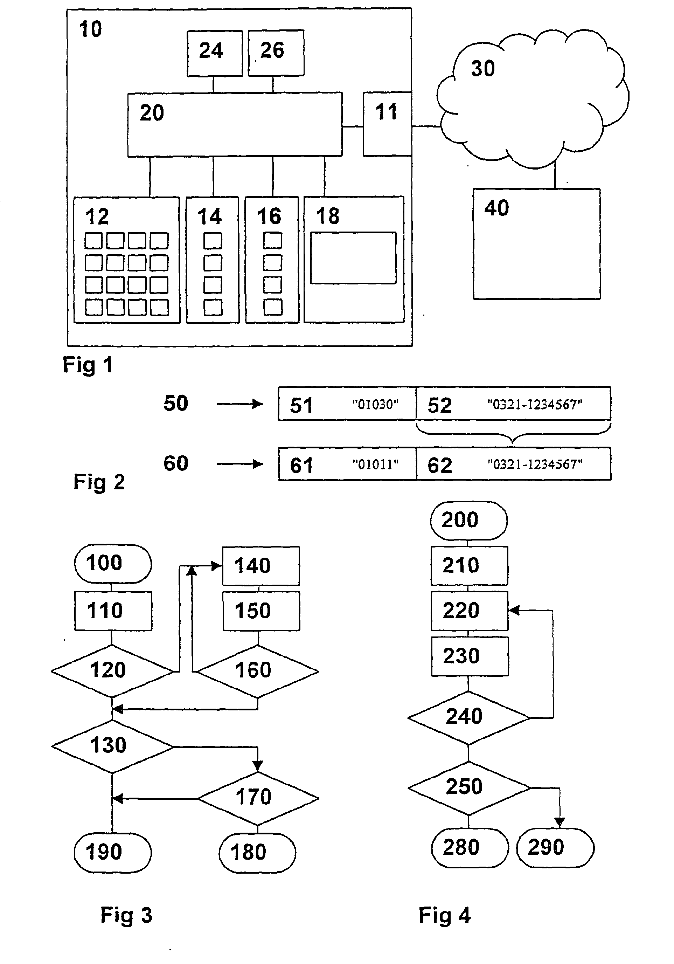

Figur 1 zeigt eine erfindungsgemäße Telekommunikationsvorrichtung 10, die mit einem Telekommunikationnetz 30 über eine drahtlose oder drahtgebunde, nicht dargestellte Schnittstelle verbunden ist. Weiterhin ist mit dem Telekommunikationnetz 30 ein Telekommunikationsteilnehmer 40 ebenfalls über eine nicht dargestellte drahtlose oder drahtgebundene Schnittstelle verbunden. Der Telekommunikationsteilnehmer 40 wird im folgenden auch Teilnehmer 40 genannt und das Telekommunikationnetz 30 wird im folgenden auch Netz 30 genannt. Ebenso wird die Telekommunikationsvorrichtung 10 im folgenden auch als Vorrichtung 10 bezeichnet. Die Vorrichtung 10 ist insbesondere als drahtgebundenes oder drahtloses Telekommunikationsendgerät vorgesehen und umfaßt Eingabemittel 12, 14, 16, Wiedergabemittel 18, einen Speicher 24 und eine Kopiervorrichtung 26. Weiterhin umfaßt die Vorrichtung 10 eine Steuereinheit 20 und eine Netzschnittstelle 11. Die Verbindung der Vorrichtung 10 zum Netz 30 ist über die Netzschnittstelle 11 geführt. Hierzu ist die Netzschnittstelle 11 mit der Steuereinheit 20 verbunden. Außerdem ist die Steuereinheit 20 mit dem Speicher 24, der Kopiervorrichtung 26, den Wiedergabemitteln 18 sowie jeweils den Eingabemitteln 12, 14 und 16 verbunden.

Als Wiedergabemittel 18 sind sämtliche im Bereich von Telekommunikationsendgeräten bzw. Telekommunikationsgeräten üblichen Wiedergabemitteln erfindungsgemäß möglich, so z.B. optische Wiedergabemittel in Form einer Anzeigenvorrichtung, akustische Wiedergabemittel in Form eines Beepers oder eines Lautsprechers und dergleichen mehr.

Als Eingabemittel 12, 14, 16 sind ein Wahltastenblock 12, Zielwahltasten 14 und/oder Funktionstasten 16 vorgesehen.

Die Vorrichtung 10 umfaßt weiterhin einen nicht dargestellten Lautsprecher oder ähnliches mit einem nicht dargestellten Mikrofon - beispielsweise in Form eines herkömmlichen Telefonhörers -' wobei der Lautsprecher und das Mikrofon jeweils mit der Steuereinheit 20 verbunden sind, so daß ein Benutzer Nutzinformationen mit der Telekommunikationsvorrichtung 10 austauschen kann.

In Figur 2 ist schematisch der Aufbau einer ersten und einer zweiten Rufnummer aus Teilnummern dargestellt. Eine zweite Rufnummer 50 umfaßt eine erste Teilnummer 51 und eine zweite Teilnummer 52. Eine erste Rufnummer 60 umfaßt ebenfalls eine erste Teilnummer 61 und eine zweite Teilnummer 62. Als Beispiel für die erste Teilnummer 51 der zweiten Rufnummer 50 wird die Ziffernfolge "01030" angegeben. Als Beispiel für die zweite Teilnummer 52 der zweiten Rufnummer 50 wird die Ziffernfolge "0321-1234567" angegeben. Als Beispiel für die erste Teilnummer 61 der ersten Rufnummer 60 wird die Ziffernfolge "01011" angegeben und für die zweite Teilnummer 62 der ersten Rufnummer 60 wird die Ziffernfolge "0321-1234567" angegeben.

Die Vorrichtung 10 funktioniert so, daß die Steuereinheit 20 sämtliche Kommunikationsvorgänge zwischen einzelnen Komponenten der Vorrichtung 10 untereinander und nach außen hin koordiniert. Beispielsweise werden Eingaben, die von einem Benutzer über die Eingabemittel 12, 14, 16 gemacht werden, an die Steuereinheit 20 übertragen und je nach Verwendungszweck beispielsweise im Speicher 24 gespeichert, an die Netzschnittstelle 11 zur Aussendung in das Netz 30 übertragen und/oder den Wiedergabemitteln 18, beispielsweise zur Anzeige, zur Verfügung gestellt. Hierbei werden von der Steuereinheit 20 gegebenenfalls zusätzliche Informationen generiert, beispielsweise Signalisierungsinformationen, die dem Speicher 24 signalisieren, dass es sich um eine zu speichernde Ziffernfolge handelt, und dergleichen mehr.

Die genaue Funktionsweise der Vorrichtung 10 in Bezug auf die Erfindung wird im folgenden anhand der Ablaufdiagramme der Figuren 3 und 4 beschrieben.

In Figur 3 wird bei einem ersten Programmpunkt 100 das erfindungsgemässe Verfahren zur Generierung einer ersten Rufnummer 60 und einer zweiten Rufnummer 50 durch den Benutzer initiiert, beispielsweise dadurch, dass der Hörer abgenommen wird, eine Funktionstaste betätigt wird oder dergleichen. Der Programmfluss geht anschliessend zu einem zweiten Programmpunkt 110 über. Beim zweiten Programmpunkt 110 wird die erste Teilnummer 51 der zweiten Rufnummer 50 mittels der Eingabemittel 12, 14, 16 in die Vorrichtung 10 eingegeben. Hierbei kann es sich sowohl um die Eingabe einer Ziffernfolge über den Wahltastenblock 12 als auch um die Eingabe der ersten Teilnummer 51 der zweiten Rufnummer 50 durch Betätigung einer oder mehrerer der Zielwahltasten 14 handeln. Als Beispiel für die erste Teilnummer 51 der zweiten Rufnummer 50 wird die Ziffernfolge EMR1.1 01030 angegeben. Eine solche Ziffernfolge dient beispielsweise der Definition eines ersten Netzbetreibers. Im Anschluss an die Eingabe der ersten Teilnummer 51 der zweiten Rufnummer 50 wird die zweite Teilnummer 52 der zweiten Rufnummer 50 eingegeben. Dies geschieht auf zur Eingabe der ersten Teilnummer 51 der zweiten Rufnummer 50 analoge Weise. Als Beispiel für die zweite Teilnummer 52 der zweiten Rufnummer 50 wird die Ziffernfolge EMR1.1 0321-1234567 angegeben. Die zweite Teilnummer 52 der zweiten Rufnummer 50 wird bevorzugt über den Wahltastenblock 12 eingegeben, kann jedoch auch über eine der Zielwahltasten 14 eingegeben werden. Die zweite Teilnummer 52 der zweiten Rufnummer 50 ist im Beispiel die Teilnehmernummer.

Nach beendeter Eingabe der zweiten Teilnummer 52 der zweiten Rufnummer 50 wird die zweite Teilnummer 52 der zweiten Rufnummer 50 automatisch im Speicher 24 gespeichert. Dies geschieht, ohne dass der Benutzer eine Speichertaste oder ähnliches betätigt. Die Vorrichtung 10 umfasst hierzu Mittel zur Erkennung der den Netzbetreiber bestimmenden ersten Teilnummer 51, 61, insbesondere die Steuereinheit 20 und den Speicher 24. Die Erkennung der den Netzbetreiber bestimmenden ersten Teilnummern 51, 61 der Rufnummern 50, 60 erfolgt beispielsweise durch Vergleich der Rufnummern 50, 60 mit einem vorgegebenen Muster. Für den zweiten Programmpunkt 110, bei dem die zweite Rufnummer 50 in ihre erste Teilnummer 51 und ihre zweite Teilnummer 52 aufgeteilt wird, bedeutet dies, dass die zweite Rufnummer 50 auf ein vorgegebenes Muster - beispielsweise "010**0***...", wobei die Sterne für beliebige Zahlen stehen - hin überprüft wird und dass bei einer Übereinstimmung der zweiten Rufnummer 50 mit dem vorgegebenen Muster eine Aufspaltung in die erste Teilnummer 51 - im angegebenen Beispiel etwa "010**" - und die zweite Teilnummer 52 - im angegebenen Beispiel etwa "0***..." - der zweiten Rufnummer 50 erfolgt. Hierdurch ist es möglich, die zweite Teilnummer 52 der zweiten Rufnummer 50 zum einen automatisch zu speichern und zum anderen mittels der Kopiervorrichtung 26 bei Bedarf in die zweite Teilnummer 62 der ersten Rufnummer 60 zu kopieren. Eine andere Möglichkeit zur Aufspaltung der Rufnummern 50, 60 besteht darin, sämtliche möglichen Vorwahlnummern für Netzbetreiber bei dem Mustervergleich heranzuziehen und zu überprüfen, ob die eingegebene Teilnummer einer solchen gespeicherten Vorwahlnummer entspricht.

Die zweite Rufnummer 50 ist nun vollständig in die Vorrichtung 10 eingegeben und der Programmfluß schreitet zu einem dritten Programmpunkt 120 fort. Beim dritten Programmpunkt 120 generiert die Vorrichtung 10 die zweite Rufnummer 50 und versucht, über das Netz 30 eine Verbindung zum Teilnehmer 40 aufzubauen. Weiterhin wird beim dritten Programmpunkt 120 geprüft, ob das Netz 30 besetzt ist oder nicht. Hierzu umfaßt die Vorrichtung Mittel zur Erkennung einer Besetztsituation im Bereich des Netzbetreibers. Diese Mittel sind beispielsweise derart ausgebildet, daß die Steuereinheit 20 bzw. die Netzschnittstelle 11 aus dem Netz 30 Signalisierungsinformationen, die beim versuchten Aufbau der Verbindung empfangen wurden, auswertet und dadurch eine solche Besetztsituation erkennt. Das Ergebnis der Prüfung beim dritten Programmpunkt 120 wird durch die Wiedergabemittel 18 einem Benutzer signalisiert. Hierdurch ist der Benutzer in der Lage, im Fall einer Besetztsituation im Bereich des Netzbetreibers einen erneuten Anwahlversuch mit einem anderen Netzbetreiber zu versuchen. Dies geschieht beispielsweise dadurch, daß der Benutzer die Eingabemittel 12, 14, 16 betätigt. Falls das Netz besetzt ist und der Benutzer die Eingabemittel 12, 14, 16 betätigt, wird zu einem fünften Programmpunkt 140 verzweigt, andernfalls wird zu einem vierten Programmpunkt 130 verzweigt. Beim fünften Programmpunkt 140 wird mittels der Eingabemittel 12, 14, 16 in zur Eingabe des ersten Teils 51 der zweiten Rufnummer 50 analoger Weise der erste Teil 61 der ersten Rufnummer 60 in die Vorrichtung 10 eingegeben. Als Beispiel für die erste Teilnummer 61 der ersten Rufnummer 60 ist die Ziffernfolge "01011" angegeben. Eine solche Ziffernfolge bestimmt insbesondere einen zweiten Netzbetreiber, über den die auf zubauende Telekommunikationsverbindung zu dem Teilnehmer 40 geleitet werden soll. Durch die Mittel zur Erkennung der den Netzbetreiber bestimmenden ersten Teilnummer 51, 61 wird die erste Teilnummer 61 der ersten Rufnummer 60 als bestimmend für einen Netzbetreiber erkannt. Anschließend fährt der Programmfluß zu einem sechsten Programmpunkt 150 fort. Beim sechsten Programmpunkt 150 wird vom Benutzer eine Wahlwiederholtaste betätigt. Die Wahlwiederholtaste ist Teil der Funktionstasten 16. Nach Betätigung der Wahlwiederholtaste wird die sich im Speicher 24 befindende zweite Teilnummer 52 der zweiten Rufnummer 50 anstelle einer erneuten Betätigung des Wahltastenblocks 12 oder der Zielwahltasten 14 als zweite Teilnummer 62 der ersten Rufnummer 60 herangezogen. Danach schreitet der Programmfluß zu einem siebten Programmpunkt 160 fort. Beim siebten Programmpunkt 160 wird die erste Rufnummer 60 aus ihrer ersten Teilnummer 61 und ihrer zweiten Teilnummer 62 generiert. Beim siebten Programmpunkt 160 wird weiterhin geprüft, ob nach Aussendung der ersten Rufnummer 60 das Netz 30 besetzt ist oder nicht. Die Besetztsituation wird dem Benutzer wieder durch die Wiedergabemittel 18 signalisiert. Falls daraufhin die Eingabemittel 12, 14, 16 betätigt werden, wird wieder zum fünften Programmpunkt 140 verzweigt, andernfalls - d.h. wenn das Netz 30 nicht besetzt war oder wenn bei besetztem Netz 30 keine Eingabemittel 12, 14, 16 betätigt werden, wird zum vierten Programmpunkt 130 verzweigt. Beim vierten Programmpunkt 130 ist entweder das Netz 30 nicht besetzt oder ein erneuter Anwahlversuch wird vom Benutzer nicht gewünscht. Im ersten Fall, d.h. wenn das Netz nicht besetzt ist, wird zu einem achten Programmpunkt 170 verzweigt, andernfalls wird zu einem zehnten Programmpunkt 190 verzweigt. Beim achten Programmpunkt 170 wird geprüft, ob der Teilnehmer 40 besetzt ist oder nicht. Falls der Teilnehmer 40 nicht besetzt ist, wird einem neunten Programmpunkt 180 verzweigt, andernfalls wird zum zehnten Programmpunkt 190 verzweigt. Beim neunten Programmpunkt 180 wird die Verbindung zum Teilnehmer 40 vollständig aufgebaut und eine Kommunikation, beispielsweise eine Sprach- und/oder Datenkommunikation kann beginnen. Beim zehnten Programmpunkt 190 wird das Programm beendet, weil klar ist, daß entweder der Teilnehmer 40 besetzt ist - und somit ein erneuter Versuch des Aufbaus einer Telekommunikationsverbindung über einen weiteren Netzbetreiber nicht sinnvoll ist - oder ein anderer Fall vorliegt.

In Figur 4 ist ein Ablaufdiagramm einer zweiten Funktionsweise der erfindungsgemäßen Telekommunikationvorrichtung 10 abgebildet, bei der eine automatische Änderung des Netzbetreibers durchgeführt wird, wenn die Vorrichtung 10 erkennt, daß die Ursache für einen Besetztzustand beim Netzbetreiber zu suchen ist. Die zweite Funktionsweise wird in einem elften Programmpunkt 200, beispielsweise durch Abheben des Hörers initiiert, woraufhin der Programmfluß zu einem zwölften Programmpunkt 210 fortschreitet. Beim zwölften Programmpunkt 210 wird über die Eingabemittel 12, 14, 16 die Eingabe der Teilnehmerrufnummer des Teilnehmers 40 eingegeben. Dies entspricht somit der Eingabe der zweiten Teilnummer 52, 62 der zweiten Rufnummer 50 bzw. der ersten Rufnummer 60. Die zweite Teilnummer 52, 62 wird im Speicher 24 gespeichert. Daraufhin schreitet der Programmfluß zu einem dreizehnten Programmpunkt 220 fort. Beim dreizehnten Programmpunkt 220 wird aus einer Liste von Netzbetreibern der günstigste Netzbetreiber automatisch ausgewählt und die ihm entsprechende Teilnummer gewählt. Die Bewertung, welcher Netzbetreiber der Günstigste ist, wird beispielsweise mittels LCR (least cost rooting) durchgeführt. Somit liegt nach Abarbeitung des dreizehnten Programmpunkts 220 durch die Auswahl des Netzbetreibers - dies entspricht der ersten Teilnummer 51 der zweiten Rufnummer 50 - und durch die Vorhaltung der Teilnehmerrufnummer im Speicher 24 - dies entspricht der zweiten Teilnummer 52 der zweiten Rufnummer 50 - die komplette zweite Rufnummer 50 zur Verfügung.

Der Programmfluß schreitet nun zu einem vierzehnten Programmpunkt 230 fort, bei dem die zweite Rufnummer 50 gewählt und der Versuch eines Verbindungsaufbaus zum Teilnehmer 40 gestartet wird. Hiernach schreitet der Programmfluß zu einem fünfzehnten Programmpunkt 240 fort, bei dem geprüft wird, ob das Netz 30 besetzt ist oder nicht. Wenn das Netz 30 besetzt ist, wird vom fünfzehnten Programmpunkt 240 zu einer nochmaligen Abarbeitung des dreizehnten Programmpunkts 220 verzweigt, andernfalls wird zu einem sechzehnten Programmpunkt 250 verzweigt. Bei einer nochmaligen Abarbeitung des dreizehnten Programmpunktes 220 wird ein weiterer Netzbetreiber automatisch ausgewählt. Bei der Auswahl des weiteren Netzbetreibers wird sichergestellt, daß der zuvor ausgewählte Netzbetreiber entweder nicht nochmals ausgewählt wird oder erst nach einer gewissen Anzahl von Wahlversuchen, d.h. einer gewissen Wartezeit, erneut ausgewählt wird. Dies wird beispielsweise dadurch realisiert, daß die Liste von Netzbetreibern in eine erste Teilliste und eine zweite Teilliste eingeteilt wird. In der ersten Teilliste sind die anzuwählenden Netzbetreiber aufgeführt und in der zweiten Teilliste sind die nichtauszuwählenden Netzbetreiber aufgeführt, wobei für die auszuwählenden Netzbetreiber entweder gilt, daß sie noch nicht angewählt wurden oder gilt, daß nach ihrer Anwahl bereits eine gewisse Wartezeit verstrichen ist. Die nichtauszuwählenden Netzbetreiber verbleiben nach einer erfolglosen Anwahl zumindest während der Wartezeit in der zweiten Teilliste. Nach der automatischen Auswahl eines Netzbetreibers wird eine diesem Netzbetreiber entsprechende erste Teilnummer 61 generiert. Somit steht zur Generierung der ersten Rufnummer 60 ihre erste Teilnummer 61 und ihre aus dem Speicher 24 ausgelesene zweite Teilnummer 62 zur Verfügung. Der Programmfluß schreitet nun zum vierzehnten Programmpunkt 230 fort.

Beim sechzehnten Programmpunkt 250 wird geprüft, ob der Teilnehmer 40 besetzt ist oder nicht. Falls der Teilnehmer 40 besetzt ist, wird zur einem achtzehnten Programmpunkt 290 verzweigt, andernfalls wird zu einem siebzehnten Programmpunkt 280 verzweigt. Beim achtzehnten Programmpunkt 290 ist klar, daß derzeit keine Verbindung zum Teilnehmer 40 aufgebaut werden kann, weil dieser besetzt ist. Beim siebzehnten Programmpunkt 280 wurde der Wahlvorgang erfolgreich durchgeführt und es kann eine Verbindung aufgebaut werden.

## Patentansprüche

1. Telekommunikationsvorrichtung (10), insbesondere Telekommunikationsendgerät, zur Eingabe einer ersten Rufnummer (60) über Eingabemittel (12, 14, 16), **dadurch gekennzeichnet, dass** ein Speicher (24) und eine Kopiervorrichtung (26) vorgesehen sind, wobei in dem Speicher (24) wenigstens ein Teil einer zuvor eingegebenen zweiten Rufnummer (50) automatisch speicherbar ist, wobei sowohl die erste Rufnummer (60) als auch die zweite Rufnummer (50) eine erste Teilnummer (61, 51) und eine zweite Teilnummer (62, 52) umfassen und wobei durch eine Aktivierung der Kopiervorrichtung (26) die zweite Teilnummer (52) der zweiten Rufnummer (50) in die zweite Teilnummer (62) der ersten Rufnummer (60) kopiert wird und wobei die erste Teilnummer (61, 51) jeweils einen Netzbetreiber bestimmt und die zweite Teilnummer (62, 52) jeweils eine Teilnehmerrufnummer ist.

2. Telekommunikationsvorrichtung (10) nach Anspruch 1, **dadurch gekennzeichnet, dass** die Telekommunikationsvorrichtung (10) Mittel zur Erkennung der den Netzbetreiber bestimmenden ersten Teilnummer (51) an der zweiten Rufnummer (50) umfasst.

3. Telekommunikationsvorrichtung (10) nach einem der vorhergehenden Ansprüche **dadurch gekennzeichnet, dass** die Eingabemittel Zielwahltasten (14, 16) oder ein Wahltastenblock (12) sind.

4. Telekommunikationsvorrichtung (10) nach einem der vorhergehenden Ansprüche, **dadurch gekennzeichnet, dass** die Telekommunikationsvorrichtung (10) Mittel zur Erkennung einer Besetztsituation im Bereich des Netzbetreibers umfasst und dass die Telekommunikationsvorrichtung (10) Wiedergabemittel (18) zur Signalisierung einer Besetztsituation im Bereich des Netzbetreibers umfasst.

5. Telekommunikationsvorrichtung (10) nach einem der Ansprüche 1 bis 3, **dadurch gekennzeichnet, dass** die Telekommunikationsvorrichtung (10) Mittel zur Erkennung einer Besetztsituation im Bereich des Netzbetreibers umfasst und dass die Kopiervorrichtung (26) automatisch aktivierbar ist.

6. Verfahren zur Generierung einer ersten und einer zweiten Rufnummer (60, 50) durch eine Telekommunikationsvorrichtung (10), insbesondere ein Telekommunikationsendgerät, **dadurch gekennzeichnet, dass** die Rufnummern (60, 50) jeweils eine erste Teilnummer (61, 51), welche einen Netzbetreiber bestimmt, und eine zweite Teilnummer (62, 52), welche eine Teilnehmerrufnummer bestimmt, umfassen, mit folgenden Schritten:
- die zweite Rufnummer (50) wird in die Telekommunikationsvorrichtung (10) eingegeben,
- die zweite Rufnummer (50) wird generiert,
- im Falle einer Besetztsituation im Bereich des Netzwerktreibers wird die erste Teilnummer (61) der ersten Rufnummer (60) in die Telekommunikationsvorrichtung (10) eingegeben,
- die erste Rufnummer (60) wird durch die Aktivierung einer Kopiervorrichtung (26) aus der ersten Teilnummer (61) der ersten Rufnummer (60) und der zweiten Teilnummer (52) der zweiten Rufnummer (50) von der Telekommunikationseinrichtung (10) generiert.

## Claims

1. A telecommunications device (10), in particular a telecommunications terminal, for inputting a first telephone number (60) via input means (12, 14, 16), **characterized in that** a storage (24) and a copying device (26) are provided, at least part of a second telephone number (50) input beforehand being automatically storable in the storage (24), both the first telephone number (60) and the second telephone number (50) comprising a first partial number (61, 51) and a second partial number (62, 52), and the second partial number (52) of the second telephone number (50) being copied into the second partial number (62) of the first telephone number (60) through activation of the copying device (26), and wherein the first partial number (61, 51) defines in each case a network provider and the second partial number (62, 52) is in each case a subscriber's telephone number.

2. The telecommunications device (10) according to claim 1, **characterized in that** the telecommunications device (10) comprises means for identifying the first partial number (51) of the second telephone number (50) defining the network provider.

3. The telecommunications device (10) according to any of the preceding claims, **characterized in that** the input means are destination dialing keys (14, 16) or a dialing keypad (12).

4. The telecommunications device (10) according to any of the preceding claims, **characterized in that** the telecommunications device (10) comprises means for identifying a busy situation in the area of the network provider and that the telecommunications device (10) comprises reproduction means (18) for signaling a busy situation in the area of the network provider.

5. The telecommunications device (10) according to any of claims 1 to 3, **characterized in that** the telecommunications device (10) comprises means for identifying a busy situation in the area of the network provider and that the copying device (26) can automatically be activated.

6. A method for generating a first and second telephone numbers (60, 50) through a telecommunications device (10), in particular a telecommunications terminal, **characterised by** each telephone number (60, 50) comprising a first partial number (61, 51) defining a network provider and a second partial number (62, 52) defining a subscriber's telephone number, with the following steps:
the second telephone number (50) is input into the telecommunications device (10),
the second telephone number (50) is generated,
in case of a busy situation in the area of the network provider the first partial number (61) of the first telephone number (60) is input into the telecommunications device (10),
the first telephone number (60) is generated by the telecommunications device (10) through activation of a copying device (26) from the first partial number (61) of the first telephone number (60) and the second partial number (52) of the second telephone number (50).

## Revendications

1. Dispositif de télécommunication (10), en particulier un terminal de télécommunication, pour entrer un premier numéro de téléphone (60) à travers des moyens d'entrée (12, 14, 16), **caractérise en ce qu**'une mémoire (24) et un dispositif de copiage (26) sont prévus, au moins une partie d'un second numéro de téléphone (50) entré avant étant mémorisable automatiquement dans la mémoire (24), le premier numéro de téléphone (60) ainsi que le second numéro de téléphone (50) comprenant un premier numéro partiel (61, 51) et un second numéro partiel (62, 52), et le second numéro partiel (52) du second numéro de téléphone (50) étant copié dans le second numéro partiel (62) du premier numéro de téléphone (60) au moyen de l'activation du dispositif de copiage (26), et moyennant quoi le premier numéro partiel (61, 51) définit à chaque fois un fournisseur de réseau et le second numéro partiel (62, 52) est à chaque fois le numéro de téléphone d'un abonné.

2. Dispositif de télécommunication (10) selon la revendication 1, **caractérise en ce que** le dispositif de télécommunication (10) comprend des moyens pour identifier le premier numéro partiel (51) du second numéro de téléphone (50) définissant le fournisseur de réseau.

3. Dispositif de télécommunication (10) selon l'une quelconque des revendications précédentes, **caractérise en ce que** les moyens d'entrée sont des touches de sélection de destination (14, 16) ou un clavier de sélection (12).

4. Dispositif de télécommunication (10) selon l'une quelconque des revendications précédentes, **caractérise en ce que** le dispositif de télécommunication (10) comprend des moyens pour identifier une situation d'occupation dans la région du fournisseur de réseau **en ce que** le dispositif de télécommunication (10) comprend des moyens de reproduction (18) pour signaler une situation d'occupation dans la région du fournisseur de réseau.

5. Dispositif de télécommunication (10) selon l'une quelconque des revendications 1 à 3, **caractérise en ce que** le dispositif de télécommunication (10) comprend des moyens pour identifier une situation d'occupation dans la région du fournisseur de réseau et **en ce que** le dispositif de copiage (26) peut être activé automatiquement.

6. Procédé pour générer un premier et un second numéro de téléphone (60, 50) au moyen d'un dispositif de télécommunication (10), en particulier un terminal de télécommunication, **caractérisé par** chaque numéro de téléphone (60, 50) comprenant un premier numéro partiel (61, 51) qui définit un fournisseur de réseau et un second numéro partiel (62, 52) qui définit un numéro de téléphone d'un abonné, avec les pas suivant:
le second numéro de téléphone (50) est entré dans le dispositif de télécommunication (10),
le second numéro de téléphone (50) est généré,
en cas d'une situation d'occupation dans la région du fournisseur de réseau le premier numéro partiel (61) du premier numéro de téléphone (60) est entré dans le dispositif de télécommunication (10),
le premier numéro de téléphone (60) est généré par le dispositiv de télécommunication (10) au moyen de l'activation d'un dispositif de copiage (26) à partir du premier numéro partiel (61) du premier numéro de téléphone (60) et du second numéro partiel (52) du second numéro de téléphone (50).
